# EUROPEAN PATENT SPECIFICATION

(11) **EP 3 399 113 B1**
(45) Date of publication and mention of the grant of the patent: **15.10.2025**
(21) Application number: 17169696.6
(22) Date of filing: 05.05.2017
(51) Int. Cl.: E03C 1/122, F16L 41/02

(54) **PLUMBING UNIT**
ROHRLEITUNGSVORRICHTUNG
ÉLÉMENT DE PLOMBERIE

(43) Date of publication of application: 07.11.2018
(73) Proprietor: Uponor Innovation AB, 730 61 Virsbo (SE)
(72) Inventor: INHA, Teemu, 04430 Järvenpää (FI); WAHLFORS, Toni, 16330 Orimattila (FI)
(74) Representative: Fenner, Seraina

(56) References cited:
- DE-U1- 29 610 493
- FR-A1- 2 639 417
- US-A- 1 201 081
- US-A- 2 015 349
- US-A- 2 340 323
- US-A- 4 477 934

## Description

### FIELD OF THE INVENTION

The invention relates to a plumbing element, a plumbing element system and a building.

### BACKGROUND

Historically, sanitary rooms, including bathrooms, lavatories or washrooms, of buildings with several floors and several apartments have water and sewage installations arranged into vertical shafts running inside structural walls, and into horizontal lines inside the floor/ceiling structures between the floors. In other words, the pipes and other conducting elements for water and waste (sewage) installations are often embedded within structures of stone, concrete, tile or other such building material. When renovations need to be done and the water and sewage installations need to be replaced, costly and timeconsuming cutting-in operations may be needed to access the pipes.

In newer buildings, modern constructions rules and building codes may require that all such pipelines should be installed so that they are accessible for maintenance, repair and future renovations without breaking the wall or floor/ceiling structures of the building. For example, water conduits leading fresh water from a mains line to a shower, a toilet or a washbasin must be surface-installed on the walls. Naturally, there are lead-through points for the pipes between floors and walls. In addition, modern building codes have strict requirements for wet sealing and water proofing, as well for constructions that allow possible leaks to be detected by leading the leaking water/liquid outside any closed structures where they become visible. Modern building codes also have requirements for noise levels, i.e. acceptable levels of sound coming from pipelines and conduits.

These kinds of installations may be time-consuming and may require great precision from the persons conducting the installations to avoid any mistakes that could lead to water or moisture damages within the sanitary rooms or building structures. Further, long horizontal lines inside the floor/ceiling structures may be required to connect different sources of waste water into the vertical shafts running inside structural walls. Constructing such horizontal lines and connections typically requires space in the vertical direction and may increase the thickness of horizontal building structures, such as floor/ceiling structures or intermediate floors, which may require lowering of the ceiling and thereby diminished room height.

US1201081A teaches a plumbing system designed for easier installation in buildings, especially those with thin floors. For this purpose, the plumbing system comprises improved fittings that provide adjustable connections to plumbing fixtures.

FR 2639417 describes an apparatus for a pipeline for construction building, comprising a cast iron pipe, a fitting, and an attachment system with collars.

US 2,340,323 describes a plumbing element according to the preamble of claim 1. Specifically, it discloses a plumbing service cabinet comprising a cabinet and a pre-assembled soil, waste, and vent piping system disposed within the cabinet.

US4477934 discloses a shipboard bathroom, providing a prefabricated base in form of a pan comprising a receptacle and a drainage pipeline for a wash basin. Also provided is a common trap draining into a sanitary drain pipe.

### SUMMARY

Starting from the disadvantages and shortcomings as described above and taking the prior art as discussed into account, an object of the present invention is to further develop a plumbing element according to the preamble of claim 1 in such way, that the complexity of the installation is reduced while ensuring an optimum flow of grey water and complying with modern building regulations with regard to noise levels.

The object of the present invention is achieved by a plumbing element comprising the features of claim 1.

This Summary is provided to introduce a selection of concepts in a simplified form that are further described below in the Detailed Description. This Summary is not intended to identify key features or essential features of the claimed subject matter, nor is it intended to be used to limit the scope of the claimed subject matter.

A plumbing element configured to conduct grey water is disclosed. It is thereby referred to appended claims.

### BRIEF DESCRIPTION OF THE DRAWINGS

The accompanying drawings, which are included to provide a further understanding of the embodiments and constitute a part of this specification, illustrate various embodiments. In the drawings:
Fig. 1A is a perspective view of a plumbing element according to an embodiment;
Fig. 1B illustrates a perspective view of a plumbing element according to another embodiment;
Fig. 2A shows an embodiment of a plumbing element as a schematic view;
Fig. 2B shows an embodiment of a plumbing element as a further schematic view;
Fig. 3A illustrates an exploded view of an embodiment of a waste conduit assembly, a floor drain and a collar plate of a plumbing element;
Fig. 3B illustrates a perspective view of an embodiment of a waste conduit assembly, a floor drain and a collar plate of a plumbing element;
Fig. 4 shows another embodiment of a waste conduit assembly and a floor drain in an exploded view;
Fig. 5 shows an embodiment of a plumbing element as a top view;
Fig. 6 shows another embodiment of a plumbing element as a top view;
Fig. 7 shows yet another embodiment of a plumbing element as a top view;
Fig. 8 shows yet another embodiment of a plumbing element as a top view; and
Fig. 9 illustrates an exemplary embodiment of a plumbing element system and a building.

### DETAILED DESCRIPTION

A plumbing element configured to be mounted to a structure of a building is disclosed. The plumbing element is configured to conduct grey water. The building comprises a vertical waste pipe system. The plumbing element comprises according to the invention a frame structure. The plumbing element further comprises a waste conduit assembly for conducting grey water from a trap. The waste conduit assembly has an upper end and a lower end, wherein the lower end is connectable to the vertical waste pipe system of the building or to the upper end of the waste conduit assembly of a second plumbing element below the plumbing element and the upper end is connectable to the vertical waste pipe system of the building or to a lower end of the waste conduit assembly of a third plumbing element above the plumbing element. The waste conduit assembly comprises a vertical waste conduit and a branch conduit, wherein the branch conduit opening to the vertical waste conduit and extending therefrom has an inlet connected to an outlet of the trap.

The plumbing element may be configured to be mounted to a wall of the building, to a floor of the building, to a ceiling of the building, or to two or more thereof. The frame structure is self-supporting.

The plumbing element is a prefabricated plumbing element. In the context of this specification, the term "prefabricated" refers to an element that is assembled in a factory as opposed to the installation site (i.e. the building, the structures of which the plumbing element is to be mounted to), and thus the element is provided to the installation site while already containing all the components of the element. The prefabricated element comprises the frame structure(s), a waste conduit assembly according to one or more embodiments described in this specification and a trap. The prefabricated element may, in some embodiments, comprise a floor drain.

In the context of this specification, the term "grey water" (also spelled graywater, greywater, gray water) may refer to wastewater generated e.g. in households or office buildings from streams without fecal contamination, i.e. any or all streams except for the wastewater from toilets. Sources of greywater may include, e.g. sinks, showers, baths, washing machines for clothes or dish washers. As greywater may contain fewer pathogens than domestic wastewater, it is generally safer to handle and easier to treat and reuse onsite for toilet flushing, landscape or crop irrigation, and other non-potable uses.

In the context of this specification, the term "trap" may refer to a water trap or a water lock. A trap, as known in the art, is a plumbing component which, due to its shape, is capable of retaining an amount of water, e.g. grey water, after the water has passed through it, so that the retained water creates a seal that prevents gas, e.g. sewer gas, from passing through the trap. Components such as floor drains, but also other plumbing components, may comprise a trap.

In an embodiment, the trap is comprised by a floor drain (i.e. the trap is a part of a floor drain), the waste conduit assembly thereby being suitable for conducting grey water from the floor drain, and the branch conduit has an inlet connected to an outlet of the floor drain.

In an embodiment, the plumbing element is an element for forming a shower area (i.e. a shower element). In an embodiment, the plumbing element is an element for forming a bath area. The bath area may be used as an installation area of a bathtub. In an embodiment, the plumbing element is an element for forming a home utility room area. In an embodiment, the plumbing element is an element for forming an installation area of a washing machine.

The vertical waste conduit has a longitudinal central axis, and the inlet of the branch conduit is disposed within a distance (Dᵢ) of up to 650 mm, for example up to 400 mm, of the longitudinal central axis of the vertical waste conduit. In an embodiment, the distance Dᵢ may be up to 600 mm, or up to 550 mm, or up to 500 mm, or up to 450 mm.

The height (h) of the branch conduit is up to 400 mm, for example in the range of 150 mm to 400 mm. In an embodiment, the height h may be up to 350 mm, or up to 300 mm, or up to 250 mm, or up to 200 mm. In an embodiment, the height h may be in the range of 200 mm to 400 mm, or 250 to 400 mm.

The lower end and the upper end of the waste conduit assembly may have longitudinal central axes that are essentially in alignment.

The vertical waste conduit has a longitudinal central axis, and the branch conduit has, at its end that opens to the vertical waste conduit, an inclined portion disposed at an angle of about 30° - 60°, for example at an angle of about 35° - 55°, or at an angle of about 45°, with respect to the longitudinal central axis of the vertical waste conduit.

The waste conduit assembly may comprise a vertical waste pipe and a Y-shaped branch pipe fitting for connecting the vertical waste pipe to the outlet of the floor drain, wherein the Y-shaped branch pipe fitting is connected to the lower end of the vertical waste pipe, such that the branch of the Y-shaped branch pipe fitting forms at least a part of the branch conduit and the Y-shaped branch pipe fitting and the vertical waste pipe form at least a part of the vertical waste conduit. The Y-shaped branch pipe fitting may be a 30° - 90°, or a 30° - 60°, or a 35° - 55°, or a 45° Y-shaped branch pipe fitting.

The plumbing element may have an outlet opening configured to be connected to an inlet of the floor drain.

The vertical waste conduit may have a longitudinal central axis, and the centre point of the outlet opening or the entire area of the outlet opening may be disposed within a distance of up to 700 mm, or up to 600 mm, or up to 400 mm of the longitudinal central axis of the vertical waste conduit.

The plumbing element may comprise a collar plate, the collar plate comprising a plate having an outlet opening configured to be connected to an inlet of the floor drain and an edge defining the outlet opening. The collar plate may further comprise a collar surrounding the edge defining the outlet opening, the collar configured to extend into the inlet of the floor drain. The plate may be configured to be connectively sealed to at least one other horizontal structure, such as to a floor structure and/or to a horizontal building structure.

In the context of this specification, the term "horizontal" may refer to a level that is perpendicular to the vertical direction. The term "horizontal" or "essentially horizontal" may refer to a level that is horizontal or at an angle of -5° to 5° of -2° to 2° of the horizontal level.

The plumbing element may further comprise a vertical partition wall extending (or configured to extend) between the vertical waste conduit and a shower area, a bath area, a home utility room area, or an installation area of a washing machine formed by the plumbing element. The collar plate may further comprise a flange extending upwards from an edge of the plate, such that the flange is configured to rest against the vertical partition wall.

The trap and/or floor drain may have a horizontal outlet. The trap and/or floor drain may have an inclined outlet.

The trap and/or floor drain may have an outlet disposed at an angle of about 30 - 90°, or at an angle of about 35° - 55°, or at an angle of about 45°. The outlet of the trap and/or floor drain may be aligned with the inclined portion at the end of the branch conduit.

The plumbing element may further comprise a conduit or pipelines for fresh water, an arrangement for connecting a tap assembly, a water meter, a sensor for monitoring water quality, automation cabling for the water meter and/or the sensor, and/or telecommunications cabling.

A plumbing element system is also disclosed, comprising a first plumbing element and a second plumbing element, wherein the first and second plumbing elements are located in two vertically adjoining spaces. The first and second plumbing elements may independently be any plumbing elements described in this specification, however, covered are the first and the second plumbing element according to at least claim 1. The first plumbing element comprises a first waste conduit assembly having an upper end and a lower end, and the second plumbing arrangement comprises a second waste conduit assembly having an upper end and a lower end. The lower end of the first waste conduit assembly is connected or connectable to the upper end of the second waste conduit assembly, such that the first and second plumbing elements are configured to form a continuous vertical waste conduit line between the vertically adjoining spaces. The continuous vertical waste conduit line may be configured to conduct grey water.

A building comprising a plumbing element system according to one or more embodiments according to the appended claims. The building may further comprise a second continuous vertical waste conduit line between the vertically adjoining spaces for conducting waste other than grey water conducted by the plumbing element system.

In the context of this specification, the term "waste water" may be understood as referring to water, possibly containing other components, such as washing agents, that may be collected by a trap connected to or comprised by the plumbing element and that are to be conducted or conveyed away from the plumbing element. It may also, at least in some embodiments, be understood as encompassing or being grey water.

As the plumbing element is according to the present invention prefabricated, less work at the installation site may be required to set up the waste conduit assembly required for the functioning of the area formed with the element. The plumbing element may be fast and easy to install, in particular when compared to assembling the waste conduit assembly required from individual components provided separately, and thus there may be less room for installation errors. Further, the quality of the plumbing element and its components may be improved, in particular when compared to setting up the waste conduit assembly required from individual components provided separately. The plumbing element requires a relatively small installation surface area, i.e. footprint. Servicing and replacing the components of the plumbing element may be relatively easy.

The plumbing element is stackable, e.g. a stackable module. In other words, the plumbing element allows installing two or more plumbing elements vertically in alignment into a continuous structure extending to two or more vertically adjoining spaces, thereby forming a continuous vertical waste conduit line and plumbing element system. However, the term stackable does not imply that the elements or modules, and in particular their frame structures, would necessarily be stacked directly on top of each other. As such a vertical waste conduit line may be separate from other vertical waste conduit lines e.g. for waste water originating from toilet fixtures and/or other fixtures, the amount of pipe conduits extending in the horizontal direction connecting the floor drain installed in connection with the plumbing element to the vertical waste conduit line may be significantly reduced.

The plumbing element, at least according to certain embodiments, may also exhibit relatively low levels of noise caused by waste water flowing in the waste conduit assembly. For example, in some countries, the maximum noise levels allowed in habitable rooms, caused by waste water plumbing arrangements in use, may be as low as 33 dB. Thus minimizing noise levels may not be a trivial task; the mechanisms of noise generation and sound propagation through structures are not well known and may be quite complex.

Reference will now be made in detail to embodiments, examples of which are illustrated in the accompanying drawings.

The description below discloses some embodiments in such a detail that a person skilled in the art is able to utilize the embodiments based on the disclosure. Not all steps of the embodiments are discussed in detail, as many of the steps will be obvious for the person skilled in the art based on this specification.

For reasons of simplicity, item numbers will be maintained in the following exemplary embodiments in the case of repeating components.

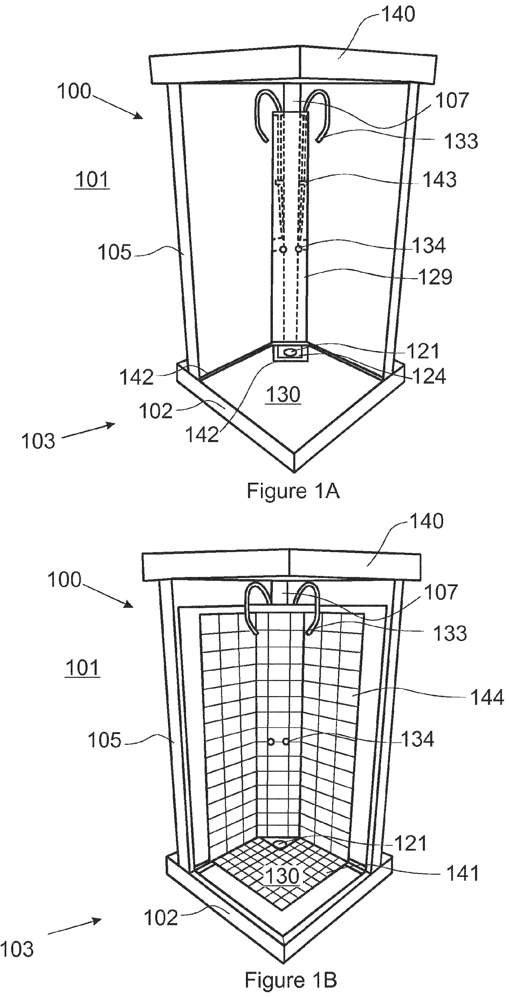

Fig. 1A shows an overview of a plumbing element 100, in this embodiment an element for forming a shower area 130, i.e. a shower element. The plumbing element 100 of Fig. 1A, shown in a perspective view, comprises a frame structure 105, which in this embodiment comprises one or more walls. The plumbing element 100 is shown as mounted inside a building 103; specifically, it is mounted against the wall 101 of the building 103. The frame structure 105 may rest on a horizontal building structure 102. The horizontal building structure 102 may be e.g. an intermediate floor or a concrete floor slab, or a floor/ceiling structure. The frame structure 105, and thereby the whole plumbing element 100, may be attached to the wall 101 of the building 103 using a suitable attachment arrangement, e.g. nuts and bolts. Any floor structures 106 (not shown in this Fig. but described in more detail below) that may be a part of the element or that are formed e.g. by casting during the installation of the plumbing element may be attached to the horizontal building structure 102 and/or to the wall 101. The frame structure 105 of the plumbing element 100 may be attached to a ceiling 140 and/or to the wall 101 of the building 103. In this schematic Fig., only sections of the horizontal building structure 102 and of the ceiling 140 are shown.

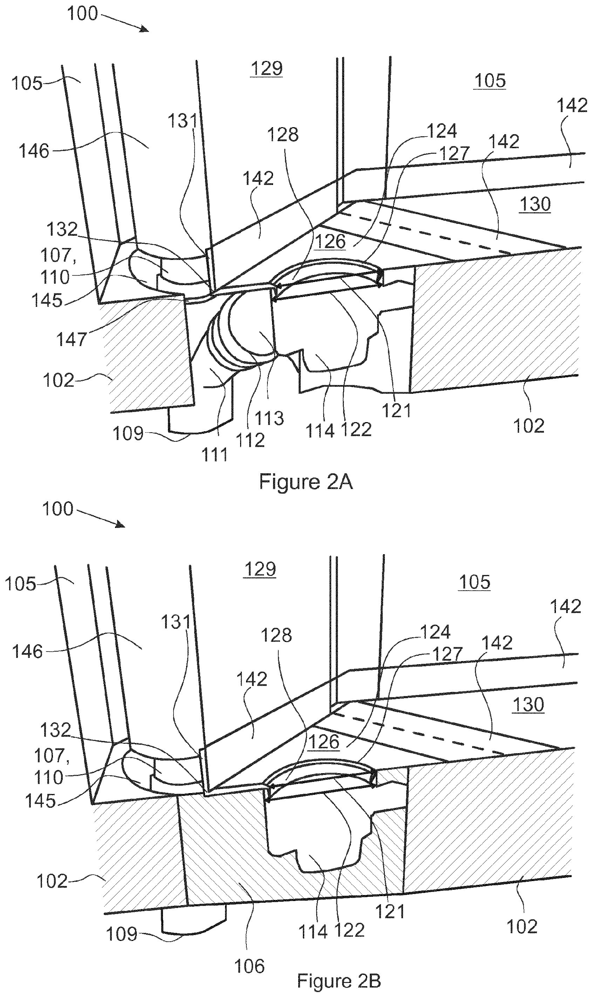

The frame structure 105 may be constructed e.g. from suitable board or sheet materials and may comprise a steel frame. Gypsum board or rock material based boards may be used for the surfaces of the frame structure or any parts thereof. It may be at least partially covered by a waterproofing membrane, when the element is in use. The waterproofing membrane may be added on site after the plumbing element 100 is mounted to a structure 101, 102 of the building 103. The frame structure 105 may comprise or be, but not necessarily, a continuous and/or monolithic structure. The plumbing element 100 comprises a waste conduit assembly 107, only a part of which is visible in this Fig. The waste conduit assembly 107 configured to conduct grey water is described in more detail below e.g. in the context of Figs. 2 to 4. The plumbing element 100 can therefore, when in use, conduct grey water to the vertical waste pipe system of the building in which it is mounted. A vertical partition wall 129 may be disposed in front of the waste conduit assembly 107 for hiding the waste conduit assembly 107. Components of the plumbing element 100 that are disposed behind the vertical partition wall 129 in this Fig. are illustrated using dash lines. The frame structure 105, the horizontal building structure 102 and the vertical partition wall 129 define a shower area 130; the element thus forms the shower area. When the plumbing element 100 is mounted in place, the surfaces of the plumbing element 100 are finished and the shower is in use, a person taking a shower may stand and take a shower in the shower area 130. The floor 141 of the shower area 130 (shown in Fig. 1B) may be built or be prefabricated on the horizontal building structure 102 and optionally on any other floor structure 106. The waste conduit assembly 107 may also be supported to the horizontal building structure 102 e.g. via suitable support members.

The vertical partition wall 129 may be made e.g. of a gypsum board. The vertical partition wall 129 may be mounted in place after the plumbing element 100 is mounted to the structures 101, 102 of the building 103. The exterior of the vertical partition wall 129 may be water resistant or wet sealing, but it is also possible to add a waterproofing membrane or tape 142 to the plumbing element, the waterproofing membrane or tape sealingly extending at least partially to the vertical partition wall 129 on its side facing the shower area 130.

The plumbing element 100 comprises a collar plate 124 having an outlet opening 121. The outlet opening 121 is configured to be connected to and to open to an inlet 122 of a floor drain 114 comprising a trap for collecting waste water from the shower area 130; the floor drain is however not visible in this Fig., but examples thereof can be seen e.g. in Figs. 2 to 4. The floor drain 114 may or may not be comprised by the plumbing element 100, as it may be provided separately. The collar plate 124, when installed and in use, may be generally horizontal or generally essentially horizontal. It should be understood that the collar plate 124 may be generally horizontal or generally essentially horizontal; however, the upper side of the collar plate 124 may be at least partially tilted, in particular tilted towards the outlet opening 121, so that when the shower is in use, water splashed on the floor 141 of the shower area 130 may flow towards the outlet opening 121. Although the outlet opening 121 is disposed at or near a corner of the plumbing element 100 according to this embodiment, other geometries are also possible.

Although the element 100 is, in this embodiment, a shower element, i.e. an element for forming the shower area 130, the element could alternatively be for forming a bath area (e.g. for installing a bathtub), a home utility room area, or an installation area of a washing machine. Any grey water obtainable from the shower area, bath area, home utility room area or installation area of a washing machine, e.g. shower or bath water or water released by a washing machine, may be collected to a trap, for instance to a trap to which the outlet opening 121 shown in this Fig. opens.

The collar plate 124 may assist in waterproofing the plumbing element 100. However, the collar plate 124 may also be omitted in some embodiments, e.g. such that the floor structure 106, which may be a part of the plumbing element 100 or constructed on site after the plumbing element 100 has been mounted, or possibly the horizontal building structure 102 has an outlet opening 121. The collar plate 124 may be, when mounted in place, connectively sealed with the horizontal building structure 102 and/or with the floor structure 106. The sealing may be provided e.g. with a waterproofing membrane or tape 142. The waterproofing membrane or tape 142 may extend at least partially to the frame structure 105 and/or to the vertical partition wall 129. The waterproofing membrane or tape 142 may be added before surfaces of the shower area (floor 141, surface cladding 144, tiling etc. shown in Fig. 1B) are laid or otherwise installed.

The plumbing element 100 may further comprise other plumbing components and/or other components. For example, the plumbing element 100 may comprise one or more conduits or pipelines 133 for fresh water, although these are not necessarily included but may be installed on site. The conduits or pipelines 133 may be attached to the frame structure 105 and/or to the vertical partition wall 129 with suitable support members 143, such as brackets or clamps. Suitable conduits or pipelines 133 may be e.g. cross-linked polyethylene (PEX) pipes for cold and hot water. The plumbing element may also comprise an arrangement 134 for connecting a tap assembly, e.g. a termination box and/or a tap fitting. The conduits or pipelines 133 may be connected to the arrangement 134 for connecting a tap assembly. Such an arrangement 134 may be attached to the frame structure 105 and/or to the vertical partition wall 129. The plumbing element 100 may further comprise e.g. a water meter, a sensor for monitoring water quality, automation cabling for the water meter and/or the sensor, and/or telecommunications cabling (not shown in this Fig.).

The plumbing element 100 shown in Fig. 1B differs from that shown in Fig. 1A at least in that at least a part of the frame structure 105 and at least a part of the horizontal building structure 102 are covered by surface cladding 144, such as tiling or other suitable cladding material, and by the floor 141 of the shower area 130. The floor 141 may also be surface cladded e.g. by tiling. The floor 141, the surface cladding 144 and/or any other surfaces may be prefabricated, i.e. they may be provided as a part of the prefabricated plumbing element 100. However, alternatively or additionally, they may also be built on site when the plumbing element 100, e.g. the plumbing element as shown in Fig. 1A, is mounted in place. In other words, the floor 141 and the surface cladding 144 are not necessarily, but may be, a part of the plumbing element 100. The outlet opening 121 may be covered by a cover or grating for allowing water to flow into the trap or floor drain 114, to which the outlet opening 121 opens. The plumbing element 100 in Fig. 1B forms, when in use, a part of a shower that may include other components, e.g. a tap assembly (not shown). Other aspects of the embodiment shown in Fig. 1B are generally similar to those of the embodiment shown in Fig. 1A.

Fig. 2A shows a part of an embodiment of a plumbing element 100 mounted on a horizontal structure 102, in this embodiment a floor/ceiling structure or an intermediate floor, when in use. Fig. 2 is intended as a schematic representation rather than an actual sectional view through the entire plumbing element, as the floor/ceiling structure 102 and certain parts of the plumbing element 100 are shown as a sectional view while certain other parts of the plumbing element 100 are shown as a side view. The plumbing element 100 again comprises a vertical frame structure 105, which may be self-supporting. An opening 145, for example a single opening or two separate openings, is provided in the floor/ceiling structure 102 for leading the lower end 109 of the waste conduit assembly 107 through the floor/ceiling structure 102 and optionally for providing room for the floor drain 114. The floor drain 114, when installed, may be held in place by a floor structure 106 formed of casting or floor mass (not shown in this Fig. for clarity but described in more detail in the context of Fig. 2B).

The waste conduit assembly 107 comprises a vertical waste conduit 110 and a branch conduit 111. The waste conduit assembly 107 may be at least partially preinsulated. The vertical waste conduit 110 may be at least partially surrounded by insulation 146. Although not shown, other parts of the waste conduit assembly 107 may also be provided with (pre)insulation for reducing noise caused by waste water flow in the waste conduit assembly 107. The plumbing element 100 further comprises a pipe support member 147 for supporting the waste conduit assembly 107, such as a bracket or a clamp. The pipe support member 147 is attached to the horizontal floor structure 102 in this embodiment, but one or more pipe support members 147 may, alternatively or additionally, be attached to the frame structure 105 and/or to the vertical partition wall 129. The plumbing element 100 may further comprise a fire collar (not shown for clarity) for preventing the spread of fire through the lead-through.

The vertical waste conduit 110 is continuous. The branch conduit 111 extends from the vertical waste conduit 110 towards the shower area 130 and the floor drain 114 comprising a trap. The trap is not shown in the Figs. for clarity, but it is a part of the floor drain 114. The floor drain 114 could, in other embodiments, be replaced by another type of trap or another plumbing component comprising a trap. The branch conduit 111 opens to the vertical waste conduit 110 and has an inlet 112 to which an outlet 113 of the floor drain 114 may be directly connected, such that the outlet 113 of the floor drain 114 opens to the branch conduit 111. The inlet 112 of the branch conduit 111 may be standardized, such that it is configured to be attached to a floor drain 114 having a standardized outlet 113. For example, the outlet 113 of the floor drain 114 and the inlet 112 of the branch conduit 111 may both have a diameter of 30 - 110 mm, e.g. 75 mm, such that they can be attached to each other directly. It may also be possible to attach the outlet 113 of the floor drain 114 to the inlet 112 of the branch conduit 111 via a suitable fitting. The floor drain 114 is thus in fluid connection with the vertical waste conduit 110. Should the floor drain 114 be replaced by another type of trap or another component comprising a trap, the inlet 112 of the branch conduit 111 could be connected to the outlet 113 of the trap or the component, either directly or via one or more suitable fittings or further components.

As the outlet opening 121 and the floor drain 114 can be placed near the vertical waste conduit 111, noise levels caused by waste water flowing in the waste conduit assembly 107, when in use, may be relatively low.

The plumbing element 100 comprises, in this embodiment, a collar plate 124. The plumbing element 100 may be provided with the collar plate 124 being separate from other components of the plumbing element 100, so that the collar plate 124 may be mounted in place after the floor drain 114 is installed and connected to the plumbing element 100. The collar plate 124 may improve the wet sealing of the plumbing element 100. The collar plate 124 is disposed at least partially on the horizontal building structure 102 and/or on the floor structure 106 and is, when mounted in place, connectively sealed with the horizontal building structure 102 and/or the floor structure 106. The sealing may be provided e.g. with a waterproofing membrane or tape 142. The collar plate 124 comprises a plate 126 having an outlet opening 121. The plate 126 may be essentially horizontal or horizontal, when the collar plate 124 is mounted in place. However, the plate 126 may be at least partially tilted, in particular towards the outlet opening 121 so that when the shower is in use, water splashed on the shower area 130 may flow towards the outlet opening 121.

The outlet opening 121 is connected to and opens to an inlet 122 of the floor drain 114. As the floor drain 114 may or may not be comprised in the plumbing element 100 and may be provided separately, the outlet opening 121 and the collar plate 124 may configured to fit a predetermined trap or floor drain 114, e.g. a trap or floor drain of predetermined or standardized dimensions. The plate 126 has an edge 127 defining the outlet opening 121. The collar plate 124 comprises a collar 128 around the edge 127. The collar 128 extends from the plate 126 so that when the collar plate 124 is in place, the collar 128 extends downwards. The collar 128 thus extends into the inlet 122 of the trap or floor drain 114. The collar 128 may e.g. rest against a seal of the inlet 122 so that it sealingly connects the collar plate 124 and thereby the horizontal floor structure 102 and/or the floor structure 106 to the floor drain 114. The lower side of the plate 126 may rest at least partially on the floor drain 114. The collar plate 124 may be attached to the floor drain 114 e.g. by a thread or by screws.

The collar plate 124 may further comprise a flange 131 extending upwards from an edge 132 of the plate 126. However, in other embodiments, the flange 131 may be omitted. Further, the collar plate 124 may comprise one or more flanges 131 at one or more edges 132 of the plate. The flange 131 may, when the collar plate 124 is mounted in place, be disposed on either side of the vertical partition wall 129 and may rest against the vertical partition wall 129. One or more flanges 131 may, additionally or alternatively, be arranged to rest against the frame structure 105 of the plumbing element 100. The vertical partition wall 129 extends along a face of the flange 131 so that the bottom edge of the vertical partition wall 129 rests against the upper side of the plate 126. In this exemplary embodiment, the flange 131 rests against the side facing towards the vertical waste conduit 110, but the flange 131 may, in other embodiments, be disposed on the side of the vertical partition wall 129 facing the shower area 130. The collar plate 124, e.g. either the plate 126 and/or the flange 131, may be sealingly connected to the vertical partition wall 129. The main material of the collar plate 124 may be e.g. steel plate (zinc electroplated or hot galvanised), a plastic material, or a composite material, or any suitable material that is resistant to water.

Fig. 2B shows the same part of the embodiment of the plumbing element 100 mounted on the horizontal structure 102, in this embodiment a floor/ceiling structure, as Fig. 2A, when in use. Fig. 2B differs from Fig. 2A at least in that the floor structure 106 holding the floor drain 114 in place is shown, again in a schematic partially cross-sectional view. The floor structure 106 may be formed e.g. of casting or a floor mass and may be constructed when installing the plumbing element 100, i.e. after the waste conduit assembly 107 is connected to the trap or floor drain 114, so it is not necessarily a part of the plumbing element. However, in other embodiments, other types of floor structures could be a part of the plumbing element.

Other aspects of the embodiment shown in Figs. 2A and 2B may be generally similar to those of the embodiment shown in Figs. 1A and 1B.

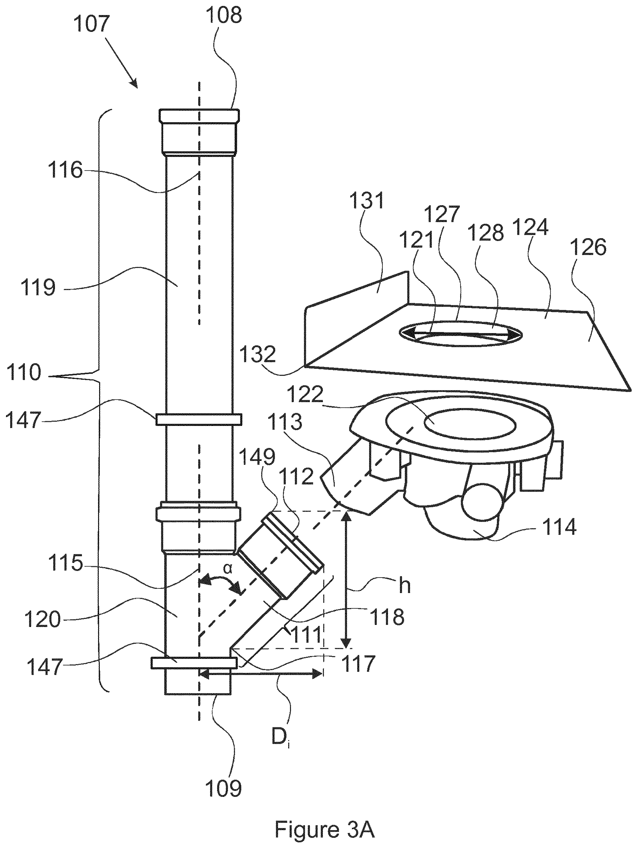

Fig. 3A shows an embodiment of the waste conduit assembly 107, the floor drain 114 and the collar plate 124 of the plumbing element as an exploded view. Again, it should be understood that he floor drain 114 may or may not be a part of the plumbing element. The vertical waste conduit 110 is the vertical portion of the waste conduit assembly 107. The vertical waste conduit 110 may be straight or essentially straight. Pipe support members 147 may be provided for attaching the waste conduit assembly 107 to the frame structure 105 and/or to the floor structure 106. For clarity, the frame structure 105 and the floor structure 106 are not shown in this Fig.

The vertical waste conduit 110 has an upper end 108 and a lower end 109. The lower end 109 has a longitudinal central axis 115. The upper end 108 has a longitudinal central axis 116. The longitudinal central axes 115 and 116 are central axes in the longitudinal direction of the vertical waste conduit 110. The longitudinal central axes 115, 116 may be essentially in alignment or in alignment. In an embodiment, the longitudinal central axes 115, 116 are essentially in alignment when the distance between them is at most 100 mm, or at most 50 mm, or at most 20 mm.

The branch conduit 111 is the portion of the waste conduit assembly 107 extending from the vertical waste conduit 110. The inlet 112 of the branch conduit 111 is disposed within a distance Dᵢ of the longitudinal central axis 115 of the vertical waste conduit 110. In order to minimize the level of noise caused by waste water flowing in the waste conduit assembly, the distance Dᵢ may be relatively small. The distance Dᵢ is up to 650 mm, for example up to 400 mm. With longer distances, and in particular relatively long horizontal portions of the branch conduit 111, noise levels may be higher. The distance Dᵢ may be measured from the furthermost edge of the inlet 112 as shown in this Fig. or, in some embodiments, from the central axis or centre point of the inlet 112.

The floor drain 114 comprising a trap, which may or may not be a part of the plumbing element, has an outlet 113, the direction of which is not particularly limited. As the floor drain 114 may or may not be comprised in the plumbing element 100 and may be provided separately, the inlet 112 of the branch conduit 111 may configured to fit the outlet 113 of a predetermined floor drain 114. For example, the inlet 112 may be be dimensioned such that it can be sealingly connected to a standard outlet 113 or to an outlet 113 of a standardized diameter or to an outlet 113 of predetermined dimensions.

The branch conduit 111 has, at its end 117 that opens to the vertical waste conduit 110, an inclined portion 118. The inclined portion 118 may be straight or essentially straight. The inclined portion 118 is disposed at an angle α of about 30° - 60°, e. g. at an angle α of about 35° - 55°, or at an angle α of about 40° - 50°, or at an angle α of about 45°. Such angles of the inclined portion 118 may be associated with particularly low noise levels caused by waste water flowing in the waste conduit assembly 107, when in use.

In an embodiment, the branch conduit 111 does not have any essentially horizontal or horizontal portions, i.e. portions in which, when in use, water would flow essentially horizontally or horizontally.

In this exemplary embodiment, the waste conduit assembly 107 comprises a vertical waste pipe 119 and a Y-shaped branch pipe fitting 120 for connecting the vertical waste pipe 119 to the outlet 113 of the floor drain 114. The Y-shaped branch pipe fitting 120 may be removably connected to the lower end of the vertical waste pipe 119. The branch of the Y-shaped branch pipe fitting forms at least a part of the branch conduit 111, and the Y-shaped branch pipe fitting and the vertical waste pipe form at least a part of the vertical waste conduit 110. The Y-shaped branch pipe fitting 120 may be integral, i.e. monolithic. Instead of being a Y-shaped branch fitting, the branch fitting 120 may be T-shaped. The Y-shaped branch pipe fitting 120 may be a 30° - 90° Y-shaped branch pipe fitting, or a 30° - 89°, or a 30° - 60°, or a 35° - 55°, or a 40 - 50°, or a 45° Y-shaped branch pipe fitting. However, the waste conduit assembly 107 may comprise further components, e.g. further fittings at the upper and/or lower end of the vertical waste pipe 119 or between the Y-shaped branch pipe fitting 120 and the inlet 112 of the branch conduit 111.

The height h of the branch conduit 111 is up to 400 mm, e.g. in the range of 150 mm to 400 mm. The height h of the branch conduit 111 may be understood, in this embodiment, as the distance between the lowest edge of the end 117 of the branch conduit 111 and the topmost edge 149 of the branch conduit 111 in the vertical direction.

The floor drain 114 further has an inlet 122 for collecting waste water from the shower area 130 (the shower area not shown in this Fig.).

The dimensions, such as diameters, of individual conduits and fittings may be selected according to various factors, such as local regulations and requirements.

Other aspects of the embodiment shown in Fig. 3A may be generally similar to those of the embodiments shown in Figs. 1A to 2.

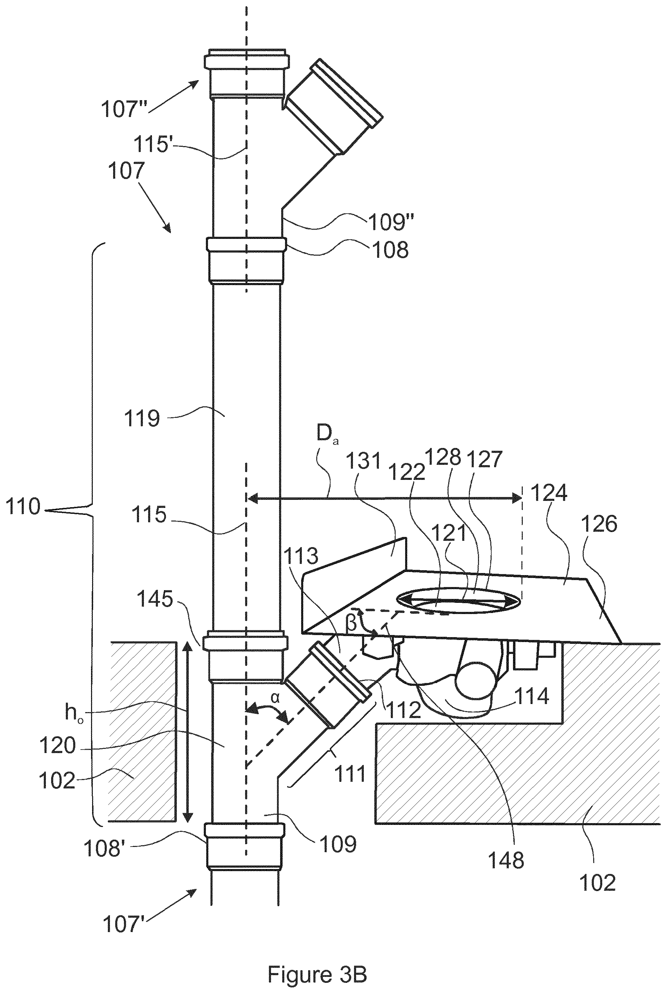

Fig. 3B differs from Fig. 3A at least in that the waste conduit assembly 107, the floor drain 114 and the collar plate 124 are shown as as perspective view when connected to each other. Fig. 3B also differs from Fig. 3A at least in that the lower end 109 of the waste conduit assembly 107, which in this embodiment is also the lower end of the Y-shaped branch pipe fitting 120, is connected to the upper end 108' of a waste conduit assembly 107' of a second plumbing element (other parts of the second plumbing element are omitted from the Fig. for clarity). The upper end 108 of the vertical waste conduit 110, which is also the upper end of the vertical waste pipe 119, is connected to the lower end 109" of a waste conduit assembly 107" of a third plumbing element (other parts of the third plumbing element are also omitted from the Fig. for clarity). They may be directly connected or connected via suitable fittings, e.g. via suitable joint fittings. The three waste conduit assemblies 107, 107', 107" of the three stacked plumbing elements thus form a continuous vertical waste conduit line. The vertical waste conduit 110 is not in scale in this schematic Fig. The central longitudinal axis 115' of the second waste conduit assembly 107', and in particular of its vertical waste conduit, of the second plumbing element may be essentially in alignment with or in alignment with the central longitudinal axis 115 of the vertical waste conduit 110.

In an embodiment, the outlet 113 of the floor drain 114 is disposed at an angle β of about 30 - 90°, or at an angle of about 35° - 89°, or at an angle of about 35° - 55°, or at an angle of about 40° - 50°. In this exemplary embodiment, the outlet 113 is disposed at an angle of about 45°. The angle β may be understood as the angle between the central axis 148 of the outlet 113 and the horizontal level. In a further embodiment, the outlet 113 of the floor drain 114 may be aligned with the inclined portion 118 at the end 117 of the branch conduit 111.

Further, in this embodiment, the outlet opening 121 of the collar plate 124 is essentially round. The entire area of the outlet opening 121 is disposed within a distance Dₐ from the longitudinal central axis 115 of the vertical waste conduit 110. The entire area of the inlet 122 of the floor drain 114, is disposed within a distance Dₐ from the longitudinal central axis 115 of the vertical waste conduit 110. In an embodiment, the distance Dₐ may be up to 700 mm, or up to 600 mm, or up to 550 mm, or up to 500 mm, or up to 450 mm, or up to 400 mm.

With the collar plate 124 attached to the floor drain 114, the collar 128 extends into the inlet 122 of the floor drain 114. The height of the collar 128 may be e.g. 15 - 25 mm. The collar 128 may rest against a seal of the inlet 122 so that it sealingly connects the collar plate 124 and thereby the entire the floor/ceiling structure 102 to the floor drain 114.

Fig. 3B differs from Fig. 3A also in that the floor/ceiling structure 102 is shown schematically in sectional view. The floor structure 106, which may be constructed later, is not shown for clarity. An opening 145 is provided in the floor/ceiling structure 102 for leading the lower end 109 of the waste conduit assembly 107 through the floor/ceiling structure 102 through. The opening 145 (and also the floor/ceiling structure 102) has a height hₒ.

The height h (not shown for clarity in this Fig.) of the branch conduit 111 may be equal to or smaller than the height hₒ of the opening 145. Such a height, e.g. a height in the range of 150 mm to 400 mm, may allow for the branch conduit 111 to fit within the height hₒ of the opening 145; depending on the particular horizontal structure 102, the height thereof may be as low as 150 - 400 mm, for example, so that the vertical space in which the branch conduit 111 must be fitted in order to connect the floor drain 114 to the vertical waste conduit 110 may be quite limited. It may be desirable to have a height h that allows for the branch conduit 111 to be submerged in a casting or floor mass that may be used to fill in the opening 145 after connecting the floor drain 114 to the branch conduit 111 and to hold the floor drain 114 in place. The casting or floor mass may thus form a floor structure 106. The floor drain 114 or other type of trap can be disposed, mainly or entirely, within the height hₒ, i.e. it can be disposed, mainly or entirely, within the floor structure 106. Thus lowering the ceiling of the space below the floor/ceiling structure may be minimized or even avoided, so that room height does not necessarily have to be reduced. Thus the useful height and volume of the space below the floor/ceiling structure, e.g. the height and volume of a sanitary room below the floor/ceiling structure, can be maximized. Constructing costs may also be significantly reduced.

Other aspects of the embodiment shown in Fig. 3B may be generally similar to those of the embodiments shown in Figs. 1A to 3A.

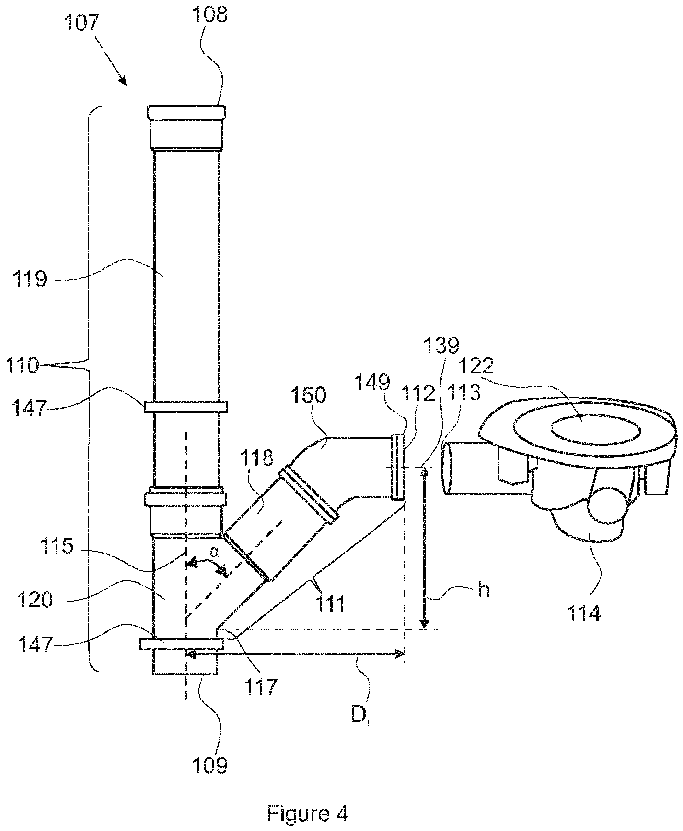

Fig. 4 illustrates another embodiment of the waste conduit assembly 107 and the floor drain 114 in an exploded view. The embodiment of Fig. 4 differs from the embodiment shown in Fig. 3A at least in that the floor drain 114 has a horizontal outlet 113.

The branch conduit 111 has, at its end 117 that opens to the vertical waste conduit 110, an inclined portion 118. The inclined portion 118 may be straight or essentially straight. The inclined portion 118 is disposed at an angle α of about 30° - 60°, e. g. at an angle α of about 35° - 55°, or at an angle α of about 40° - 50°, or at an angle α of about 45°. However, the branch conduit 111 further comprises a bend portion 150. In this embodiment, the bend portion 150 is formed at least partially by a bend pipe fitting, one end of which opens to the Y-shaped branch fitting 120 and the other end of which has an inlet 112 for connecting the branch conduit 111 to the outlet 113 of the floor drain 114 (or, in other embodiments, to an outlet of another type of trap). The bend portion may have a bend of about 30° - 90°, or about 30° - 60°, or about 35° - 55°, or about 40° - 50°, or about 45°. In this embodiment, the height h of the branch conduit 111 is measured as the distance between the lowest edge of the end 117 of the branch conduit 111 and the central axis 139 of the inlet 112 of the branch conduit 111 in the vertical direction. The height h is up to 400 mm, e.g. in the range of 150 mm to 400 mm, or any other height described in this specification.

In another embodiment, the height h may be measured as the distance between the central axis 139 of the inlet 112 of the branch conduit 111 in the vertical direction and the central axis of the end 117 of the branch conduit 111. Such a height is up to 400 mm, e.g. at least 10 mm, or, or in the range of 10 mm to 400 mm.

Again, the inlet 112 of the branch conduit 111 is disposed within a distance Dᵢ of the longitudinal central axis 115 of the vertical waste conduit 110. The distance Dᵢ is up to 650 mm, for example up to 400 mm, or any other value for Dᵢ described in this specification. In some embodiments, adding more parts to the waste conduit assembly 107, in particular to the branch conduit 111, may increase the distance Dᵢ undesirably, so that the floor drain 114 will be disposed further away from the vertical conduit 110.

Other aspects of the embodiment shown in Fig. 4 may be generally similar to those of the embodiments shown in Figs. 1A to 3B.

Further embodiments may also be contemplated. Other parts of such a branch conduit 111 may, however, be inclined. Various other geometries for the waste conduit assembly 107 may also be contemplated. For example, the branch conduit 111 may be provided by a swept or curved fitting instead of the Y-shaped branch fitting 120. The outlet 113 of the floor drain 114 may be vertical. However, in such an embodiment, the height h may be greater, so that the branch conduit 111 may take up more vertical space and may be difficult to fit in the space provided, in particular when the horizontal structure 102 of the building 103 is relatively thin. Custom fittings may be provided for providing a desired geometry for the waste conduit assembly 107. It is noted that the present invention according to claim 1 covers certain ranges of distance, height and the angle alfa.

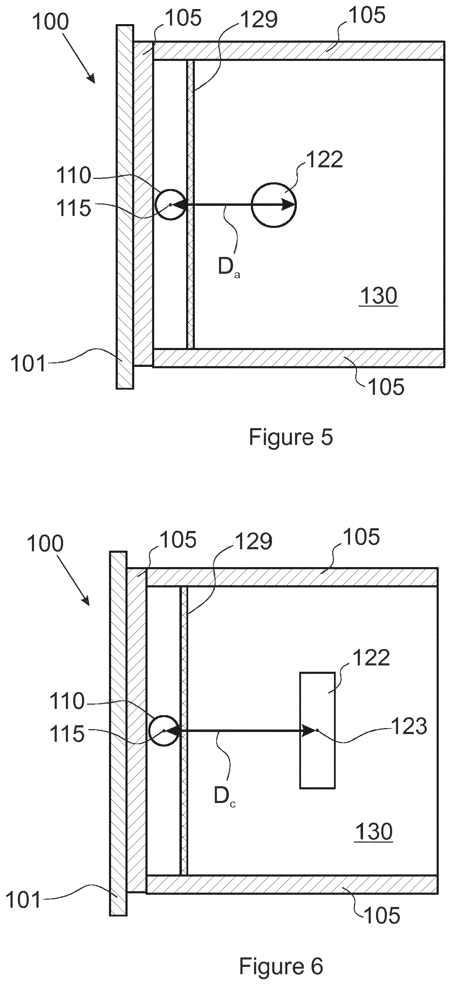

Fig. 5 shows an embodiment of the plumbing element 100 as a top view. The plumbing element 100, in particular a frame structure 105, is mounted in place and disposed against a wall 101 of a building. This exemplary embodiment differs from those shown in Figs. 1A to 4 at least in that the vertical waste conduit 110 is not arranged at or near a corner of the plumbing element 100 but near the midpoint of the portion of the frame structure 105 facing the wall 101. The plumbing element 100 also does not comprise a collar plate. A floor drain 114 or other trap (not shown), which may be a part of the plumbing element 100 or provided separately, has been connected to the plumbing element 100, the floor drain having an inlet 122, the entire area of which is disposed within a distance Dₐ of the longitudinal central axis 115 of the vertical waste conduit 110. The distance Dₐ may be e.g. up to 700 mm, or up to 650 mm, or up to 600 mm, or up to 550 mm, or up to 500 mm, or up to 450 mm, or up to 400 mm of the longitudinal central axis 115. In this embodiment, the inlet 122 is round, although other shapes may also be contemplated. Other aspects of the embodiment shown in Fig. 5 may be generally similar to those of the embodiments shown in Figs. 1A to 4.

The embodiment of the plumbing element 100 illustrated in Fig. 6 differs from that shown in Fig. 5 at least in that the inlet 122 of the floor drain 114 (again not shown) is not round but rectangular and elongated. The inlet 122 has a centre point (midpoint) 123. The centre point 123 of the inlet 122 is disposed within a distance D_{c} of the longitudinal central axis 115 of the vertical waste conduit 110. The distance D_{c} may be e.g. up to 700 mm, or up to 650 mm, or up to 600 mm, or up to 550 mm, or up to 500 mm, or up to 450 mm, or up to 400 mm of the longitudinal central axis 115. Other aspects of the embodiment shown in Fig. 6 may be generally similar to those of the embodiments shown in Figs. 1A to 5.

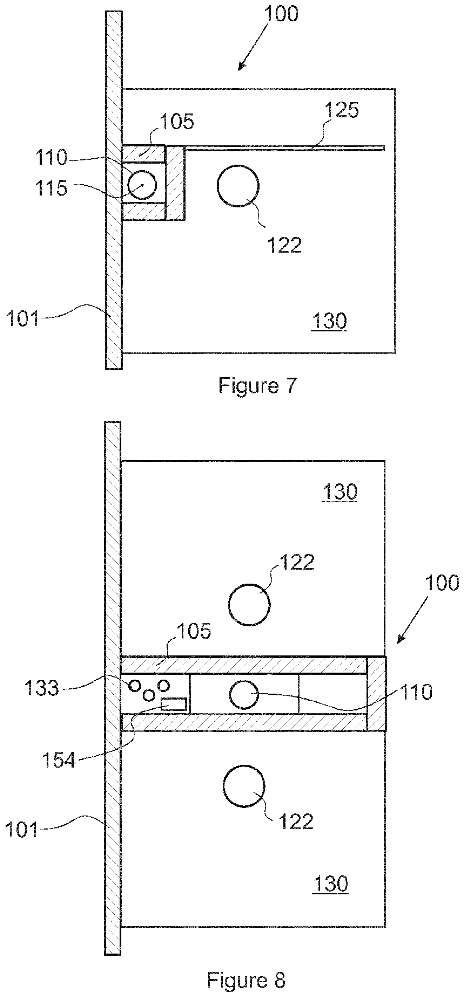

Fig. 7 illustrates a plumbing element 100 for forming a shower area 130. In this embodiment, the frame structure 105 is relatively small and has a rectangular or square cross-section. Such an element may take up relatively little space. The frame structure 105 is arranged against a wall 101 of a building and may hide the vertical waste conduit 110. Other parts of the waste conduit assembly 107 are not shown. The inlet 122 of a floor drain 114 or other type of trap is disposed within the shower area 130. An optional shower screen 125 may be provided, either as a part of the plumbing element 100 or installed on site, for preventing splashing of water outside of the shower area 130. Instead of forming a shower area 130, the plumbing element 100 could be used to form e.g. a bath area, a home utility room area, or an installation area of a washing machine.

Fig. 8 illustrates an embodiment in which the plumbing element 100, i.e. the frame structure 105, functions as a room divider. A short end of a longitudinal frame structure 105 is mounted against a wall 101 of the building. The plumbing element 100 may further comprise conduits or pipelines 133 for fresh water. The plumbing element 100 further comprises an additional component 154, such as a water meter, a sensor for monitoring water quality, automation cabling for the water meter and/or the sensor, and/or telecommunications cabling.

Two, or in further embodiments more, inlets 122 of floor drains 114 or other types of traps are disposed on opposite sides of the longitudinal rectangular frame structure 105, so that the plumbing element 100 forms shower areas 130 on opposite sides of the frame structure 105. Such an embodiment may be useful in particular in sanitary rooms that are intended for the use of a large number of people, **e.g.** sanitary rooms in connection with locker rooms. One or more of the shower areas 130 could, in some embodiments, be **e.g.** a bath area, a home utility room area, or an installation area of a washing machine instead.

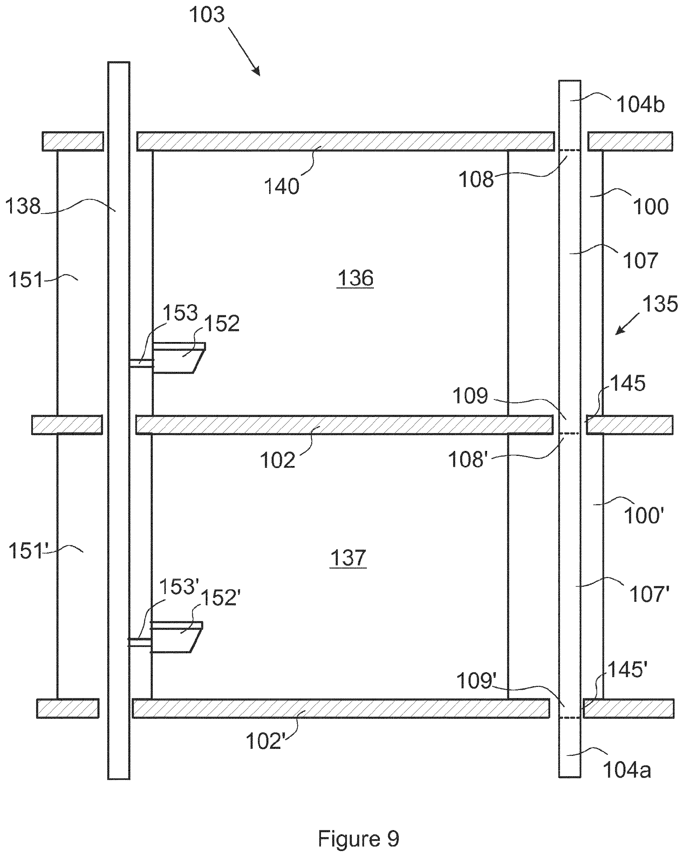

Fig. 9 illustrates schematically a plumbing element system 135 and a building 103 comprising the system. Fig. 9 is intended as a schematic representation of the system rather than an actual sectional view through the entire system, as the horizontal structures, **e.g.** floor/ceiling structures 102, 102', 102'' of the building 103 are shown as a sectional view while parts of the plumbing and other plumbing elements are shown as a side view. The plumbing element system 135 comprises a first plumbing element 100 and a second plumbing element 100' located in two vertically adjoining spaces 136 and 137, respectively. The two vertically adjoining spaces may be rooms, for instance toilets, bathrooms, washrooms or lavatories, separated by the floor/ceiling structure 102, the second plumbing element 100' located below the first plumbing element 100. For clarity, only a part of both elements is shown. The aspects of the embodiment of the plumbing elements shown in Fig. 9 may be generally similar to those of the embodiments shown in Figs. 1A to 8. The plumbing elements 100, 100' and 100'' may be prefabricated.

The lower end 109 of the first waste conduit assembly 107 is, when in use, connected to the upper end 108' of the second waste conduit assembly 107', so that the first 100 and second 100' plumbing elements form a continuous vertical plumbing element system 135 and a continuous vertical waste conduit line 107, 107' between (and within) the vertically adjoining spaces 136, 137. The upper end 108 of the first plumbing element 100 is connected to the vertical waste pipe system 104b of the building 103. The lower end 109' of the second plumbing element 100' is connected to the vertical waste pipe system 104a of the building 103. Openings 145, 145' may be provided in the floor/ceiling structures 102, 102', 140 for leading the lower ends 109, 109' of the waste conduit assemblies 107, 107' through the floor/ceiling structures 102, 102'.

The first and second waste conduit assemblies 107, 107' may be connected directly or via one or more suitable fittings. The plumbing element system 135 and the continuous vertical waste conduit line 107, 107' are configured to conduct grey water. The parts of the vertical waste pipe system 104a, 104b above and below the plumbing elements 100, 100' are thus in fluid connection via the continuous vertical waste conduit line 107, 107'. The first and second waste conduit assemblies 107, 107' may be essentially in alignment. However, as in any construction, there may be deviations from vertical alignment, as long as the vertical waste conduit line 107, 107' can be constructed using suitable fittings and is functional. For example, deviations of up to 100 mm, or up to 50 mm, may be tolerated. If necessary, waste conduit assemblies 107, 107' can still be connected in the presence of deviations from vertical alignment using suitable fittings, e.g. within horizontal building structures.

The building 103 further comprises a second continuous vertical waste conduit line 138 between, and within, the vertically adjoining spaces 136, 137 for conducting waste other than waste water from the plumbing element system 135. For example, the vertically adjoining spaces 136, 137 may contain suitable structures 151, 151' supporting toilet fixtures 152, 152'. The toilet fixtures 152, 152' may be in fluid connection with the second continuous vertical waste conduit line 138 via toilet waste conduits 153, 153', such that waste water (blackwater) from the toilet fixtures 152, 152' and possibly from other fixtures, such as sinks, may be conducted via the second continuous vertical waste conduit line 138. The second continuous vertical waste conduit line 138 is thus configured to conduct waste other than the grey water conducted by the plumbing element system 135. The waste other than the grey water conducted by the plumbing element system 135 may contain blackwater (sewage). As the plumbing element system 135 forms its own separate continuous vertical waste conduit line 107, 107', there is no need to provide long horizontal runs of waste conduits from the plumbing elements 100, 100' to the second continuous vertical waste conduit line 138. It is also possible to collect or otherwise utilize the grey water conducted by the plumbing element system 135 separately for further use, because it does not contain any blackwater (sewage).

Further, with plumbing elements 100 according to one or more embodiments described in this specification, lowering the ceiling of the space 137 below the floor/ceiling structure may be minimized or even avoided, so that room height does not necessarily have to be reduced. Thus the useful height and volume of the space 137 below the floor/ceiling structure, e.g. the height and volume of a sanitary room below the floor/ceiling structure, can be maximized. Constructing costs may also be significantly reduced.

## Claims

1. A plumbing element (100) configured to conduct grey water, wherein the plumbing element is configured to be mounted to a structure (101, 102) of a building (103), the building comprising a vertical waste pipe system (104a, 104b), wherein the plumbing element comprises a self-supporting frame structure (105);
the plumbing element further comprises a trap or a component, such as a floor drain, comprising the trap, and a waste conduit assembly (107) for conducting grey water from the trap or from the component comprising the trap, the waste conduit assembly having an upper end (108) and a lower end (109), wherein the lower end is connectable to the vertical waste pipe system (104a) of the building or to the upper end (108') of the waste conduit assembly (107') of a second plumbing element (100') below the plumbing element (100) and the upper end is connectable to the vertical waste pipe system (104b) of the building or to a lower end (109'') of the waste conduit assembly (107'') of a third plumbing element (100'') above the plumbing element (100); and
the waste conduit assembly (107) comprises a vertical waste conduit (110) and a branch conduit (111), wherein the vertical waste conduit (110) forms the upper end(108) and the lower end (109) of the waste conduit assembly
, wherein
the branch conduit (111) opening to the vertical waste conduit (110) and extending therefrom has an inlet (112) connected to an outlet (113) of the trap or to an outlet (113) of the component, such as a floor drain (114), comprising the trap;
**characterised in that**
the plumbing element (100) is a prefabricated plumbing element being assembled before mounting on a structure of the building while already comprising the frame structure (105), the waste conduit assembly (107) and the trap or the component, such as a floor drain (114), comprising the trap, wherein the waste conduit assembly (107) is attached to the frame structure (105) by means of at least one pipe support member (147);
the vertical waste conduit (110) has a longitudinal central axis (115), and the inlet (112) of the branch conduit (111) is disposed within a distance (Dᵢ) of up to 650 mm of the longitudinal central axis of the vertical waste conduit,
the height (h) of the branch conduit (111) is up to 400 mm,
and the branch conduit (111) has, at its end (117) that opens to the vertical waste conduit (110), an inclined portion (118) disposed at an angle (α) of about 30° - 60° with respect to the longitudinal central axis of the vertical waste conduit.

2. The plumbing element according to claim 1, wherein the plumbing element is an element for forming a shower area (130), a bath area, a home utility room area, or an installation area of a washing machine.

3. The plumbing element according to claim 1 or 2, wherein the vertical waste conduit (110) has a longitudinal central axis (115), and the inlet (112) of the branch conduit (111) is disposed within a distance (Dᵢ) of up to 400 mm, of the longitudinal central axis of the vertical waste conduit.

4. The plumbing element according to any one of claims 1 - 3, wherein the height (h) of the branch conduit (111) is in the range of 10 mm to 400 mm, or in the range of 150 mm to 400 mm.

5. The plumbing element according to any one of claims 1 - 4, wherein the lower end (109) and the upper end (108) of the waste conduit assembly (107) have longitudinal central axes (115, 116) that are essentially in alignment.

6. The plumbing element according to any one of claims 1 - 5, wherein the inclined portion (118) is disposed at an angle (α) of about 35° - 55°, or at an angle of about 45°, with respect to the longitudinal central axis of the vertical waste conduit.

7. The plumbing element according to any one of claims 1 - 6, wherein the waste conduit assembly (107) comprises a vertical waste pipe (119) and a Y-shaped branch pipe fitting (120) for connecting the vertical waste pipe (119) to the outlet (113) of the trap or the outlet of the component, such as a floor drain (114), wherein the Y-shaped branch pipe fitting is connected to the lower end of the vertical waste pipe, such that the branch of the Y-shaped branch pipe fitting forms at least a part of the branch conduit (111) and the Y-shaped branch pipe fitting and the vertical waste pipe form at least a part of the vertical waste conduit (110); and wherein the Y-shaped branch pipe fitting is a 30° - 60°, or a 35° - 55°, or a 45° Y-shaped branch pipe fitting.

8. The plumbing element according to any one of claims 1 - 7, further comprising a floor drain (114) comprising the trap, wherein the vertical waste conduit (110) has the longitudinal central axis (115), and the centre point (123) of an inlet (122) of the floor drain (114) or the entire area of the inlet (122) of the floor drain (114) is disposed within a distance (D_{c}, Dₐ) of up to 700 mm of the longitudinal central axis (115) of the vertical waste conduit (110).

9. The plumbing element according to claim 8, wherein the plumbing element comprises a collar plate (124), the collar plate comprising
a plate (126) having an outlet opening (121) configured to be connected to an inlet (122) of the floor drain (114), and an edge (127) defining the outlet opening, and
a collar (128) surrounding the edge (127) of the outlet opening, such that the collar is configured to extend into the inlet (122) of the floor drain (114).

10. The plumbing element according to any one of claims 1 - 9, wherein the outlet (113) of the trap or the outlet of the component, such as a floor drain (114), is a horizontal outlet (113), or wherein the outlet (113) of the trap is disposed at an angle (β) of about 30 - 90°, or at an angle of about 35° - 55°, or at an angle of about 45°, wherein the angle is the angle between the central axis (148) of the outlet (113) and the horizontal level, and wherein the outlet of the trap or the outlet of the component, such as a floor drain (114), is optionally aligned with the inclined portion (118) at the end (117) of the branch conduit (111).

11. The plumbing element according to any one of claims 1 - 10, wherein the plumbing element further comprises a conduit or pipelines (133) for fresh water, an arrangement (134) for connecting a tap assembly, a water meter, a sensor for monitoring water quality, automation cabling for the water meter and/or the sensor, and/or telecommunications cabling (154).

12. A plumbing element system (135), comprising a first plumbing element (100) and a second plumbing element (100'), wherein the first and second plumbing elements are located in two vertically adjoining spaces (136, 137); wherein
the first and second plumbing elements are plumbing elements according to any one of claims 1 - 11;
the lower end (109) of the waste conduit assembly of the first plumbing element is connected or connectable to the upper end (108') of the waste conduit assembly of the second plumbing element, such that the first and second plumbing elements are configured to form a continuous vertical waste conduit line (107, 107') between the vertically adjoining spaces.

13. A building (103), comprising the plumbing element system (135) according to claim 12 and a second continuous vertical waste conduit line (138) between the vertically adjoining spaces (136, 137) configured to conduct waste other than grey water conducted by the plumbing element system.

## Patentansprüche

1. Rohrleitungselement (100), das dazu ausgelegt ist, Grauwasser zu leiten, wobei das Rohrleitungselement dazu ausgelegt ist, an einer Struktur (101, 102) eines Gebäudes (103) montiert zu sein, wobei das Gebäude ein vertikales Abwasserrohrsystem (104a, 104b) umfasst, wobei das Rohrleitungselement eine selbsttragende Rahmenstruktur (105) umfasst;
wobei das Rohrleitungselement ferner ein Knie oder eine das Knie umfassende Komponente, zum Beispiel einen Bodenablauf, und eine Abwasserleitungsbaugruppe (107) zum Leiten des Grauwassers vom Knie oder von der das Knie umfassenden Komponente umfasst, wobei die Abwasserleitungsbaugruppe ein oberes Ende (108) und ein unteres Ende (109) aufweist, wobei das untere Ende mit dem vertikalen Abwasserrohrsystem (104a) des Gebäudes oder dem oberen Ende (108') der Abwasserleitungsbaugruppe (107') eines zweiten Rohrleitungselements (100') unter dem Rohrleitungselement (100) verbindbar ist und das obere Ende mit dem vertikalen Abwasserrohrsystem (104b) des Gebäudes oder einem unteren Ende (109") der Abwasserleitungsbaugruppe (107") eines dritten Rohrleitungselements (100") über dem Rohrleitungselement (100) verbunden ist; und
wobei die Abwasserleitungsbaugruppe (107) eine vertikale Abwasserleitung (110) und eine Abzweigungsleitung (111) umfasst, wobei die vertikale Abwasserleitung (110) das obere Ende (108) und das untere Ende (109) der Abwasserleitungsbaugruppe ausbildet,
wobei die Abzweigungsleitung (111) zur vertikalen Abwasserleitung (110) geöffnet ist und einen sich davon erstreckenden Einlass (112) aufweist, der mit einem Auslass (113) des Knies oder einem Auslass (113) der das Knie umfassenden Komponente, zum Beispiel einem Bodenablauf (114), verbunden ist;
**dadurch gekennzeichnet, dass**
das Rohrleitungselement (100) ein vorgefertigtes Rohrleitungselement ist, das vor der Montage an einer Struktur des Gebäudes zusammengebaut wird und bereits die Rahmenstruktur (105), die Abwasserleitungsbaugruppe (107) und das Knie oder die das Knie umfassende Komponente, zum Beispiel einen Bodenablauf (114), umfasst, wobei die Abwasserleitungsbaugruppe mittels mindestens eines Rohrhalterungselements (147) an der Rahmenstruktur (105) befestigt ist;
die vertikale Abwasserleitung (110) eine mittige Längsachse (115) aufweist und der Einlass (112) der Abzweigungsleitung (111) in einer Entfernung (Dᵢ) von bis zu 650 mm der mittigen Längsachse der vertikalen Abwasserleitung angeordnet ist,
die Höhe (h) der Abzweigungsleitung (111) bis zu 400 mm beträgt
und die Abzweigungsleitung (111) an dem Ende (117), das zur vertikalen Abwasserleitung (110) geöffnet ist, einen schrägen Abschnitt (118) aufweist, der in einem Winkel (α) von etwa 30°-60° in Bezug zur mittigen Längsachse der vertikalen Abwasserleitung angeordnet ist.

2. Rohrleitungselement nach Anspruch 1, wobei das Rohrleitungselement ein Element zum Ausbilden eines Duschbereichs (130), eines Badebereichs, eines Hauswirtschaftsraumbereichs oder eines Einbaubereichs einer Waschmaschine ausgebildet ist.

3. Rohrleitungselement nach Anspruch 1 oder 2, wobei die vertikale Abwasserleitung (110) eine mittige Längsachse (115) aufweist und der Einlass (112) der Abzweigungsleitung (111) in einer Entfernung (Dᵢ) von bis zu 400 mm der mittigen Längsachse der vertikalen Abwasserleitung angeordnet ist.

4. Rohrleitungselement nach einem der Ansprüche 1-3, wobei die Höhe (h) der Abzweigungsleitung (111) im Bereich von 10 mm bis 400 mm oder im Bereich von 150 mm bis 400 mm liegt.

5. Rohrleitungselement nach einem der Ansprüche 1-4, wobei das untere Ende (109) und das obere Ende (108) der Abwasserleitungsbaugruppe (107) mittige Längsachsen (115, 116) aufweisen, die im Wesentlichen miteinander ausgerichtet sind.

6. Rohrleitungselement nach einem der Ansprüche 1-5, wobei der schräge Abschnitt (118) in einem Winkel (α) von etwa 35°-55° oder einem Winkel von etwa 45° in Bezug zur mittigen Längsachse der vertikalen Abwasserleitung angeordnet ist.

7. Rohrleitungselement nach einem der Ansprüche 1-6, wobei die Abwasserleitungsbaugruppe (107) ein vertikales Abwasserrohr (119) und ein Y-förmiges Abzweigungsrohrfitting (120) zur Verbindung des vertikalen Abwasserrohrs (119) mit dem Auslass (113) des Knies oder dem Auslass der das Knie umfassenden Komponente, zum Beispiel einem Bodenablauf (114), umfasst,
wobei das Y-förmige Abzweigungsrohrfitting mit dem unteren Ende des vertikalen Abwasserrohrs verbunden ist, sodass die Abzweigung des Y-förmigen Abzweigungsrohrfittings zumindest einen Teil der Abzweigungsleitung (111) ausbildet und das Y-förmige Abzweigungsrohrfitting und das vertikale Abwasserrohr zumindest einen Teil der vertikalen Abwasserleitung (110) ausbilden und wobei das Y-förmige Abzweigungsrohrfitting ein Y-förmiges Abzweigungsrohrfitting mit 30°-60° oder 35°-55° oder 45° ist.

8. Rohrleitungselement nach einem der Ansprüche 1-7, ferner umfassend einen das Knie umfassenden Bodenablauf (114), wobei die vertikale Abwasserleitung (110) die mittige Längsachse (115) aufweist und der Mittelpunkt (123) eines Einlasses (122) des Bodenablaufs (114) oder die Gesamtfläche des Einlasses (122) des Bodenablaufs (114) in einer Entfernung (D_{c}, Dₐ) von bis zu 700 mm der mittigen Längsachse (115) der vertikalen Abwasserleitung (110) angeordnet ist.

9. Rohrleitungselement nach Anspruch 8,
wobei das Rohrleitungselement eine Manschettenplatte (124) umfasst, wobei die Manschettenplatte Folgendes umfasst:
eine Platte (126), die eine Auslassöffnung (121), die dazu ausgelegt ist, mit einem Einlass (122) des Bodenablaufs (114) verbunden zu sein, und eine die Auslassöffnung definierende Kante (127) aufweist, und
eine Manschette (128), welche die Kante (127) der Auslassöffnung umgibt, sodass die Manschette dazu ausgelegt ist, sich in den Einlass (122) des Bodenablaufs (114) zu erstrecken.

10. Rohrleitungselement nach einem der Ansprüche 1-9, wobei der Auslass (113) des Knies oder der Auslass der Komponente, zum Beispiel einem Bodenablauf (114), ein horizontaler Auslass (113) ist oder wobei der Auslass (113) des Knies in einem Winkel (β) von etwa 30-90° oder einem Winkel von etwa 35°-55° oder einem Winkel von etwa 45° angeordnet ist, wobei der Winkel der Winkel zwischen der Mittelachse (148) des Auslasses (113) und der horizontalen Ebene ist und wobei der Auslass des Knies oder der Auslass der Komponente, zum Beispiel einem Bodenablauf (114), optional mit dem schrägen Abschnitt (118) am Ende (117) der Abzweigungsleitung (111) ausgerichtet ist.

11. Rohrleitungselement nach einem der Ansprüche 1-10, wobei das Rohrleitungselement ferner eine Leitung oder Rohrleitungen (133) für Frischwasser, eine Anordnung (134) zum Anschließen einer Wasserhahnbaugruppe, einen Wasserzähler, einen Sensor zum Überwachen der Wasserqualität, Automatisierungsverkabelung für den Wasserzähler und/oder den Sensor und/oder Telekommunikationskabel (154) umfasst.

12. Rohrleitungselementsystem (135), umfassend ein erstes Rohrleitungselement (100) und ein zweites Rohrleitungselement (100'), wobei sich das erste und zweite Rohrleitungselement in zwei vertikal angrenzenden Räumen (136, 137) befinden; wobei
das erste und zweite Rohrleitungselement Rohrleitungselemente nach einem der Ansprüche 1-11 sind; das untere Ende (109) der Abwasserleitungsbaugruppe des ersten Rohrleitungselements mit dem oberen Ende (108') der Abwasserleitungsbaugruppe des zweiten Rohrleitungselements verbunden oder verbindbar ist, sodass das erste und zweite Rohrleitungselement dazu ausgelegt sind, einen durchgehenden vertikalen Abwasserleitungsstrang (107, 107') zwischen den vertikal angrenzenden Räumen auszubilden.

13. Gebäude (103), umfassend das Rohrleitungselementsystem (135) nach Anspruch 12 und einen zweiten durchgehenden vertikalen Abwasserleitungsstrang (138) zwischen den vertikal angrenzenden Räumen (136, 137), der dazu ausgelegt ist, vom Rohrleitungselementsystem geleitetes Abwasser, das kein Grauwasser ist, zu leiten.

## Revendications

1. Élément de plomberie (100) configuré pour conduire des eaux grises, dans lequel l'élément de plomberie est configuré pour être monté sur une structure (101, 102) d'un bâtiment (103), le bâtiment comprenant un système tuyau d'évacuation vertical (104a, 104b), dans lequel l'élément de plomberie comprend une structure de cadre autoportante (105) ;
l'élément de plomberie comprend en outre un siphon ou un composant, tel qu'un avaloir de plancher, comprenant le siphon, et un ensemble conduit d'évacuation (107) pour conduire des eaux grises depuis le siphon ou depuis le composant comprenant le siphon, l'ensemble conduit d'évacuation ayant une extrémité supérieure (108) et une extrémité inférieure (109), dans lequel l'extrémité inférieure peut être raccordée au système tuyau d'évacuation vertical (104a) du bâtiment ou à l'extrémité supérieure (108') de l'ensemble conduit d'évacuation (107') d'un deuxième élément de plomberie (100') en dessous de l'élément de plomberie (100) et l'extrémité supérieure peut être raccordée au système tuyau d'évacuation vertical (104b) du bâtiment ou à une extrémité inférieure (109") de l'ensemble conduit d'évacuation (107") d'un troisième élément de plomberie (100'') au-dessus de l'élément de plomberie (100) ; et
l'ensemble conduit d'évacuation (107) comprend un conduit d'évacuation vertical (110) et un conduit de dérivation (111), dans lequel le conduit d'évacuation vertical (110) forme l'extrémité supérieure (108) et l'extrémité inférieure (109) de l'ensemble conduit d'évacuation, dans lequel le conduit de dérivation (111) donnant sur le conduit d'évacuation vertical (110) et s'étendant depuis celui-ci a une entrée (112) raccordée à une sortie (113) du siphon ou à une sortie (113) du composant, tel qu'un avaloir de plancher (114), comprenant le siphon ;
**caractérisé en ce que**
l'élément de plomberie (100) est un élément de plomberie préfabriqué assemblé avant le montage sur une structure du bâtiment alors qu'il comprend déjà la structure de cadre (105), l'ensemble conduit d'évacuation (107) et le siphon ou le composant, tel qu'un avaloir de plancher (114), comprenant le siphon, dans lequel l'ensemble conduit d'évacuation (107) est fixé à la structure de cadre (105) au moyen d'au moins un organe de support de tuyau (147) ;
le conduit d'évacuation vertical (110) a un axe central longitudinal (115), et l'entrée (112) du conduit de dérivation (111) est disposée dans les limites d'une distance (Dᵢ) pouvant atteindre 650 mm de l'axe central longitudinal du conduit d'évacuation vertical,
la hauteur (h) du conduit de dérivation (111) peut atteindre 400 mm,
et le conduit de dérivation (111) a, à son extrémité (117) qui donne sur le conduit d'évacuation vertical (110), une portion inclinée (118) disposée à un angle (α) d'environ 30° à 60° par rapport à l'axe central longitudinal du conduit d'évacuation vertical.

2. Élément de plomberie selon la revendication 1, dans lequel l'élément de plomberie est un élément pour former une zone de douche (130), une zone de bain, une zone de buanderie domestique, ou une zone d'installation d'une machine à laver.

3. Élément de plomberie selon la revendication 1 ou 2, dans lequel le conduit d'évacuation vertical (110) a un axe central longitudinal (115), et l'entrée (112) du conduit de dérivation (111) est disposée dans les limites d'une distance (Dᵢ) pouvant atteindre 400 mm, de l'axe central longitudinal du conduit d'évacuation vertical.

4. Élément de plomberie selon l'une quelconque des revendications 1 à 3, dans lequel la hauteur (h) du conduit de dérivation (111) est dans la plage de 10 mm à 400 mm, ou dans la plage de 150 mm à 400 mm.

5. Élément de plomberie selon l'une quelconque des revendications 1 à 4, dans lequel l'extrémité inférieure (109) et l'extrémité supérieure (108) de l'ensemble conduit d'évacuation (107) ont des axes centraux longitudinaux (115, 116) qui sont essentiellement en alignement.

6. Élément de plomberie selon l'une quelconque des revendications
1 à 5, dans lequel la portion inclinée (118) est disposée à un angle (α) d'environ 35° à 55°, ou à un angle d'environ 45°, par rapport à l'axe central longitudinal du conduit d'évacuation vertical.

7. Élément de plomberie selon l'une quelconque des revendications 1 à 6, dans lequel l'ensemble conduit d'évacuation (107) comprend un tuyau d'évacuation vertical (119) et un raccord de tuyau de dérivation en forme de Y (120) pour raccorder le tuyau d'évacuation vertical (119) à la sortie (113) du siphon ou à la sortie du composant, tel qu'un avaloir de plancher (114), dans lequel le raccord de tuyau de dérivation en forme de Y est raccordé à l'extrémité inférieure du tuyau d'évacuation vertical, de manière telle que la dérivation du raccord de tuyau de dérivation en forme de Y forme au moins une partie du conduit de dérivation (111) et le raccord de tuyau de dérivation en forme de Y et le tuyau d'évacuation vertical forment au moins une partie du conduit d'évacuation vertical (110) ; et dans lequel le raccord de tuyau de dérivation en forme de Y est un raccord de tuyau de dérivation en forme de Y de 30° à 60°, ou de 35° à 55°, ou de 45°.

8. Élément de plomberie selon l'une quelconque des revendications 1 à **7,** comprenant en outre un avaloir de plancher (114) comprenant le siphon, dans lequel le conduit d'évacuation vertical (110) a l'axe central longitudinal (115), et le point central (123) d'une entrée (122) de l'avaloir de plancher (114) ou la superficie entière de l'entrée (122) de l'avaloir de plancher (114) est disposée dans les limites d'une distance (D_{c}, Dₐ) pouvant atteindre 700 mm de l'axe central longitudinal (115) du conduit d'évacuation vertical (110).

9. Élément de plomberie selon la revendication 8, dans lequel l'élément de plomberie comprend une plaque-collet (124), la plaque-collet comprenant une plaque (126) ayant une ouverture de sortie (121)
configurée pour être raccordée à une entrée (122) de l'avaloir de plancher (114), et un bord (127) définissant l'ouverture de sortie, et
un collet (128) entourant le bord (127) de l'ouverture de sortie, de manière telle que le collet est configuré pour s'étendre dans l'entrée (122) de l'avaloir de plancher (114).

10. Élément de plomberie selon l'une quelconque des revendications 1 à 9, dans lequel la sortie (113) du siphon ou la sortie du composant, tel qu'un avaloir de plancher (114), est une sortie horizontale (113), ou dans lequel la sortie (113) du siphon est disposée à un angle (β) d'environ 30 à 90°, ou à un angle d'environ 35° à 55°, ou à un angle d'environ 45°, dans lequel l'angle est l'angle entre l'axe central (148) de la sortie (113) et le niveau horizontal, et dans lequel la sortie du siphon ou la sortie du composant, tel qu'un avaloir de plancher (114), est facultativement alignée avec la portion inclinée (118) à l'extrémité (117) du conduit de dérivation (111).

11. Élément de plomberie selon l'une quelconque des revendications 1 à 10, dans lequel l'élément de plomberie comprend en outre un conduit ou une canalisation (133) pour de l'eau propre, un agencement (134) pour raccorder un ensemble robinet, un compteur d'eau, un capteur destiné à surveiller une qualité de l'eau, un câblage d'automatisation pour le compteur d'eau et/ou le capteur, et/ou un câblage de télécommunication (154).

12. Système d'éléments de plomberie (135), comprenant un premier élément de plomberie (100) et un deuxième élément de plomberie (100'), dans lequel les premier et deuxième éléments de plomberie sont situés dans deux espaces verticalement contigus (136, 137) ; dans lequel les premier et deuxième éléments de plomberie sont des éléments de plomberie selon l'une quelconque des revendications 1 à 11 ;
l'extrémité inférieure (109) de l'ensemble conduit d'évacuation du premier élément de plomberie est raccordée ou raccordable à l'extrémité supérieure (108') de l'ensemble conduit d'évacuation du deuxième élément de plomberie, de manière telle que les premier et deuxième éléments de plomberie sont configurés pour former une conduite verticale continue de conduit d'évacuation (107, 107') entre les espaces verticalement contigus.

13. Bâtiment (103), comprenant le système d'éléments de plomberie (135) selon la revendication 12 et une deuxième conduite verticale continue de conduit d'évacuation (138) entre les espaces verticalement contigus (136, 137) configurée pour conduire des eaux usées autres que les eaux grises conduites par le système d'éléments de plomberie.
